# EUROPEAN PATENT SPECIFICATION

(11) **EP 3 634 007 B1**
(45) Date of publication and mention of the grant of the patent: **23.11.2022**
(21) Application number: 18805816.8
(22) Date of filing: 22.05.2018
(51) Int. Cl.: H04M 1/60, H04R 3/00, H04M 9/08, H04M 1/03, H04M 1/04, H04R 1/02, H04R 1/40

(54) **ONBOARD DEVICE**
BORDVORRICHTUNG
DISPOSITIF EMBARQUÉ

(30) Priority: 24.05.2017 JP 2017102421
(43) Date of publication of application: 08.04.2020
(73) Proprietor: TRANSTRON Inc., Kouhoku-ku Yokohama-shi, Kanagawa 222-0033 (JP)
(72) Inventor: TANAKA, Yasuhisa, Yokohama-shi Kanagawa 222-0033 (JP); YAMAGUCHI, Tomoyuki, Yokohama-shi Kanagawa 222-0033 (JP)
(74) Representative: Winter, Brandl - Partnerschaft mbB
(86) International application number: PCT/JP2018/019685
(87) International publication number: WO 2018/216694

(56) References cited:
- JP-A- 2006 186 926
- JP-A- 2008 252 722
- JP-A- 2017 135 496
- JP-A- 2018 014 588
- US-A1- 2010 017 205
- US-A1- 2015 124 988
- US-B1- 9 479 627

## Description

### Technical Field

The present invention relates to a device for being mounted on board of a vehicle.

### Background Art

JP 2006 197149 A discloses an onboard voice-communication device including: a main body in which a communication module, which is configured to transmit and receive signals to and from an external device by a wireless method, and a speaker are embedded; flexible arms each having a predetermined length and provided to each of both side surfaces of the main body; and microphones each provided to a distal end of each of the flexible arms.

US 2010/017205 A1 discloses a hands-free car kit device including four microphones and one loudspeaker. US 2015/124988 A1 discloses a digital signal processor that processes input signals from symmetrically arranged microphones. US 9 479 627 B1 discloses a desktop speakerphone including a sound driver (serves as a speaker) and a pair of microphone clusters.

### Summary of Invention

### Technical Problem

In a case where the onboard voice-communication device described in JP 2006 197149 A is installed in a vehicle cabin, for example, on the top of a dashboard, it is required that, after installing the main body on the dashboard, the flexible arms be extended along the dashboard, and then the microphones be installed. This results in an esthetically unfavorable appearance and brings about difficulties in installation. Moreover, in a case where the onboard voice-communication device described in JP 2006 197149 A is installed inside the dashboard, it is required that, after installing the body inside the dashboard, the flexible arms be extended along the back surface of the dashboard. This brings about difficulties in installation.

The present invention has been made in view of such circumstances and an object thereof is to provide a device for being mounted on board of a vehicle that includes a casing including a speaker and two microphones. With this device, it is possible, by simply installing the casing in a vehicle cabin, to install the speaker and two microphones at once, and to arrange the two microphones near a driver seat and near a front passenger seat, respectively.

### Solution to Problem

The technical object is solved by the subject-matter of claim 1 or claim 2. A preferred embodiment of the present invention is the subject-matter of a dependent claim.

In the device according to the present invention, inside the casing that is provided in a front portion of the vehicle cabin and that is in the vicinity of the center in the vehicle width direction, the speaker, the first microphone, and the second microphone are adjacently provided to the first surface not to overlap each other when viewed in the direction facing the first surface. With this, by simply installing the casing in the vehicle cabin, the speaker and the two microphones can be installed at once. Moreover, the casing is provided such that the direction substantially orthogonal to the first center line, which is the center line of the first surface, extends along the vehicle width direction, and the first microphone and the second microphone are arranged at the line-symmetric positions, with the first center line being the center therebetween. With this, the first microphone and the second microphone can be arranged near a driver seat and near a front passenger seat, respectively.

Here, the second center line is substantially orthogonal to the first surface, and when viewed in the direction facing the first surface, an angle formed between a first line, which connects a point of intersection of the first center line and the second center line with a center of the first microphone, and a second line of the speaker, is substantially from 10 degrees to 20 degrees, the second line being a center line substantially parallel with the first center line. With this, the size of the casing can be reduced in the direction substantially orthogonal to the first center line.

In the subject-matter of claim 2, the speaker is arranged in the transverse direction, and the size of the casing can further be reduced in the direction substantially parallel with the first center line.

Here, the device may further include: a signal input unit configured to acquire an input signal from the first microphone and an input signal from the second microphone; a determination processing unit configured to determine whether to use the first microphone or the second microphone, based on the input signal from the first microphone and the input signal from the second microphone; and a voice processing unit configured to process the input signal from the first microphone or the input signal from the second microphone, based on a result of determination made by the determination processing unit. With this, it becomes possible to determine which one of the two microphones is to be used, based on the input results of the two microphones.

### Advantageous Effects of Invention

According to the present invention, it is possible, by simply installing the casing in the vehicle cabin, to install the speaker and the two microphones at once, and to arrange the two microphones near a driver seat and near a front passenger seat, respectively.

### Brief Description of Drawings

FIG. 1 is a view schematically illustrating a vehicle cabin 100 of an automobile in which an onboard device 1 according to a first embodiment is provided.
FIGS. 2A, 2B, 2C, 2D, 2E, and 2F are six views illustrating a schematic configuration of the onboard device 1 according to the first embodiment, and are a front view, a top view, a bottom view, a left side view, a right side view, and a back side view, respectively.
FIG. 3 is a front view illustrating a schematic configuration of the onboard device 1.
FIG. 4 is a schematic view illustrating an electrical configuration of the onboard device 1.
FIGS. 5A, 5B, 5C, 5D, 5E, and 5F are six views illustrating a schematic configuration of an onboard device 2 according to a reference embodiment, which is not part of the present invention, and are a front view, a top view, a bottom view, a left side view, a right side view, and a back side view, respectively.
FIG. 6 is a front view illustrating the schematic configuration of the onboard device 2.
FIGS. 7A, 7B, 7C, 7D, 7E, and 7F are six views illustrating a schematic configuration of an onboard device 3 according to a second embodiment, and are a front view, a top view, a bottom view, a left side view, a right side view, and a back side view, respectively.
FIG. 8 is a front view illustrating a schematic configuration of the onboard device 3.

### Description of Embodiments

With reference to the drawings, detailed description on an onboard device according to embodiments of the present invention is provided below. In the embodiments described below, an embodiment is exemplified, in which the onboard device according to the present invention is applied to a calling device configured to implement so-called hands-free calling and the like in an automobile. However, the onboard device according to the present invention is not limited to the calling device and may be applied to, for example, a device configured to perform input to a car navigation device and output of voice from the car navigation device which is provided in an automobile.

### First Embodiment

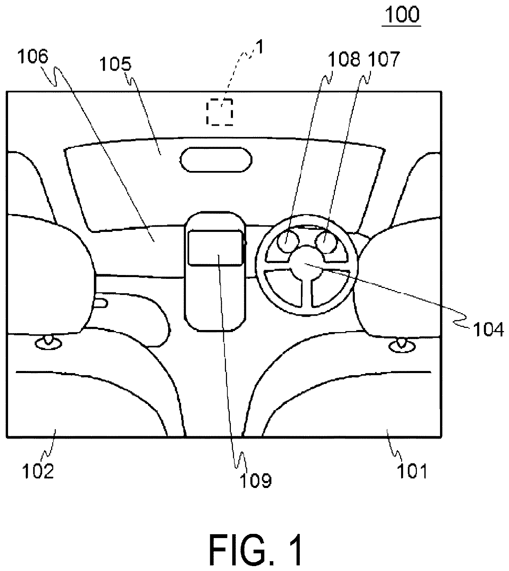

FIG. 1 is a view schematically illustrating a vehicle cabin 100 of an automobile to which an onboard device 1 according to a first embodiment is provided. FIG. 1 a view schematically illustrating a part of the vehicle cabin 100 when the vehicle cabin 100 is viewed from a rear to a front. A horizontal direction in FIG. 1 is a vehicle width direction.

In the vehicle cabin 100, a driver seat 101, a front passenger seat 102, and the like are provided. On the front of the driver seat 101, a steering wheel 104 is provided. On the front in the vehicle cabin 100, a windshield 105, a dashboard 106, and the onboard device 1 are mainly provided.

The dashboard 106 is provided with a speedometer 107, a tachometer 108, and the like, mainly in front of the driver seat 101. A display unit 109 of a car navigation device or the like is provided mainly in the vicinity of the center of the dashboard 106 in the vehicle width direction.

The onboard device 1 is provided in a front portion of the vehicle cabin and in the vicinity of the center in the vehicle width direction. For example, the onboard device 1 is provided inside an overhead console (not shown) provided at a ceiling center portion above the windshield 105. Note that the onboard device 1 may be provided inside the dashboard 106, for example, on the back side of the display unit 109.

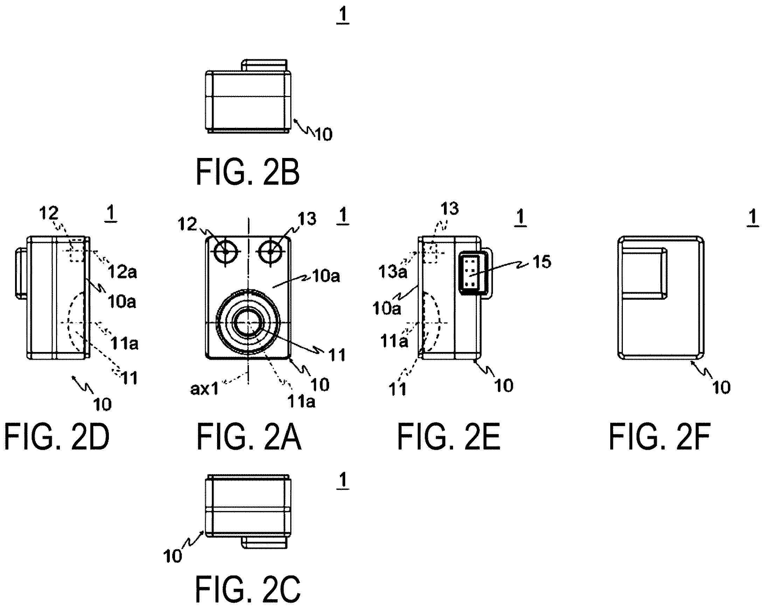

FIGS. 2A, 2B, 2C, 2D, 2E, and 2F are six views illustrating a schematic configuration of the onboard device 1 according to the first embodiment, and are a front view, a top view, a bottom view, a left side view, a right side view, and a back side view, respectively.

The onboard device 1 mainly includes a casing 10, a speaker 11, microphones 12 and 13, and a connector 15. However, it is not essential to include the connector 15. Note that, in FIG. 2, embedded portions of the speaker 11 and the microphones 12 and 13, which are embedded inside the casing 10, are indicated by dotted lines.

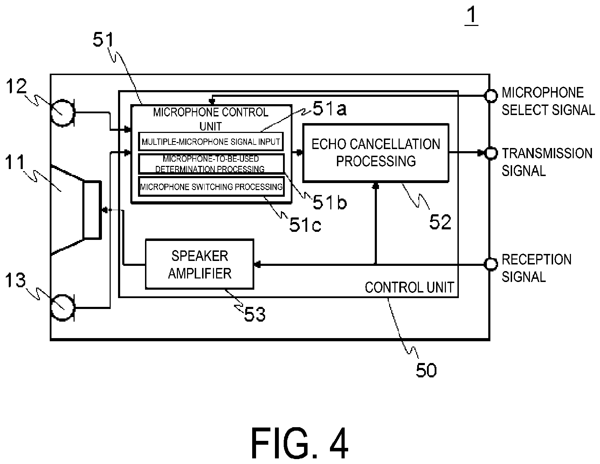

The casing 10 is a box-like member having a substantially rectangular parallelepiped shape and is hollow inside. Inside the casing 10, the speaker 11, the two microphones 12, a control unit 50 (not shown in FIG. 2; see FIG. 4), and the like are provided. The speaker 11 and the two microphones 12 are adjacently provided to a front surface 10a (here, the back side) (see FIG. 2A).

The speaker 11 is a member that outputs voice and the like, and is provided with a diaphragm on the front surface side thereof. A center line 11a extending in a thickness direction of the speaker 11 extends in a thickness direction of the casing 10 and is substantially orthogonal to the front surface 10a. Further, the center line 11a overlaps a center line ax1 of the front surface 10a. In other words, the speaker 11 is provided substantially at the center of the front surface 10a in the horizontal direction.

The microphones 12 and 13 convert sound into electric signals, and are, for example, microelectronics mechanical system (MEMS) microphones. Center lines 12a and 13a extending respectively in thickness directions of the microphones 12 and 13 extend in the thickness direction of the casing 10 and are substantially orthogonal to the front surface 10a.

The casing 10 is provided in the vehicle cabin 100 such that a direction substantially orthogonal to the center line ax1 on the front surface 10a (see FIG. 2A) extends along the vehicle width direction. Further, preferably in the casing 10, the center line ax1 is positioned substantially at the center in the vehicle width direction, but it is only required that the casing 10 be provided in the vicinity of the center in the vehicle width direction.

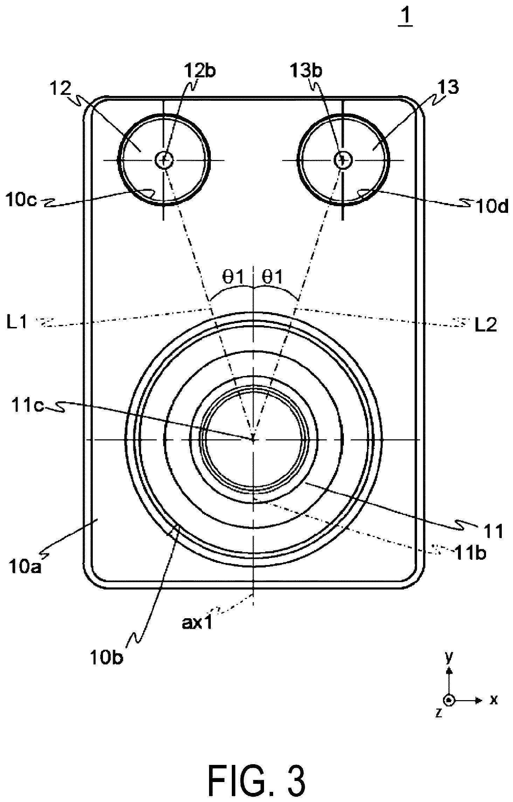

FIG. 3 is a front view illustrating a schematic configuration of the onboard device 1. FIG. 3 is an enlarged view of FIG. 2A. In FIG. 3, the front surface 10a is substantially parallel with a plane xy. A right-and-left direction on the paper surface of the figure is an x direction, an up-and-down direction on the paper surface of the figure is a y direction, and the thickness direction of the casing 10 is a z direction.

A hole 10b from which the speaker 11 is exposed, a hole 10c from which the microphone 12 is exposed, and a hole 10d from which the microphone 13 is exposed are formed in the front surface 10a. When viewed in a direction facing the front surface 10a, the front surface of the speaker 11 is exposed through the hole 10b, the front surface of the microphone 12 is exposed through the hole 10c, and the front surface of the microphone 13 is exposed through the hole 10d.

The speaker 11 and the microphones 12 and 13 are arranged not to overlap each other when viewed in the direction facing the front surface 10a (here, in the +z direction). In the present embodiment, when viewed in the +z direction, the position of the speaker 11 in a direction along the center line ax1 (the y direction) and the positions of the microphones 12 and 13 in the y direction do not overlap each other.

In order to widen a distance between the speaker 11 and the microphones 12 and 13 as much as possible, the speaker 11 is arranged in the vicinity of the lower end (the end on the -y side) of the front surface 10a, and the microphones 12 and 13 are arranged in the vicinity of the upper end (the end on the +y side) of the front surface 10a.

The speaker 11 is provided substantially at the center of the front surface 10a in the x direction. That is, the center line 11a and the center line ax1 intersect, and the intersection point therebetween is a center point 11c. The microphones 12 and 13 are arranged at line-symmetric positions, with the center line ax1 being the center therebetween.

Moreover, when viewed in the +z direction, an angle θ1 formed between a line L1 connecting the center point 11c with the center of the microphone 12 and a center line 11b substantially parallel with the center line ax1 of the speaker 11; and an angle θ1 formed between a line L2 connecting the center point 11c with the center of the microphone 13 and the center line 11b are acute angles. The angles θ1 each are substantially from 10 degrees to 20 degrees (in the present embodiment, substantially 18 degrees).

With this, while the distance between the speaker 11 and the microphones 12 and 13 is widened as much as possible, the size of the casing 10 (in this case, the width of the front surface 10a in the x direction) can be reduced. Note that in order to perform switch-over to the microphone that is to be used, based on input signals from the microphones 12 and 13 (described later in detail), it is preferable that the distance between the microphone 12 and the microphone 13 be substantially 20 mm or larger.

FIG. 4 is a schematic view illustrating an electrical configuration of the onboard device 1. The onboard device 1 includes the control unit 50 that mainly includes a microphone control unit 51, an echo cancellation processing unit 52, and a speaker amplifier 53.

The control unit 50 performs control on the entirety of the onboard device 1. The control unit is a program control device such as a central processing unit (CPU), i.e., an arithmetic device, and operates in accordance with a program stored in a storage unit (not shown). The storage unit is a nonvolatile memory, a volatile memory, or the like, holds a program and the like to be executed by the control unit 50, and operates as a working memory for the control unit 50.

The microphone control unit 51 mainly includes a multiple-microphone signal input unit 51a, a microphone-to-be-used determination processing unit 51b, and a microphone switching processing unit 51c.

The multiple-microphone signal input unit 51a acquires input signals from the microphones 12 and 13. Then, the multiple-microphone signal input unit 51a converts analog signals, which are input from the microphones 12 and 13, into digital signals.

The microphone-to-be-used determination processing unit 51b determines whether to use the microphone 12 or the microphone 13. When a microphone select signal is input to the microphone control unit 51, the microphone-to-be-used determination processing unit 51b selects, from the microphones 12 and 13, a microphone that has been indicated by the microphone select signal. The microphone selection signal may be input in advance or may be input by a user with the use of a button or the like (not shown).

Moreover, the microphone-to-be-used determination processing unit 51b determines whether to use the microphone 12 or the microphone 13, based on an input signal from the microphone 12 and an input signal from the microphone 13.

Now, description on processing of the microphone-to-be-used determination processing unit 51b is provided by exemplifying a case where a driver in the driver seat 101 and a passenger in the front passenger seat 102 speak at the same time.

In the present embodiment, the casing 10 is provided in a front portion of the vehicle cabin 100 and in the vicinity of the center in the vehicle width direction, and the microphones 12 and 13 are provided at the line-symmetric positions, with the center line ax1 of the casing 10 being the center therebetween. Thus, the microphone 13 is arranged near the driver seat 101, and the microphone 12 is arranged near the front passenger seat 102. Therefore, the voice of the driver reaches the microphone 13 first and reaches the microphone 12 later.

The microphone-to-be-used determination processing unit 51b implements frequency analysis on digital signals from the microphones 12 and 13 to perform, for each frequency band, processing of calculating from which direction the sound is coming. As a result, the wording that the driver or the passenger uses and the loudness thereof can be determined.

Moreover, the microphone-to-be-used determination processing unit 51b determines, based on these results, which one of the microphones 12 and 13 is to be used. For example, when the voice of the driver is louder, the microphone-to-be-used determination processing unit 51b determines that the microphone 13 is to be used. Moreover, for example, when the passenger utters more words than the driver, the microphone-to-be-used determination processing unit 51b determines that the microphone 12 is to be used.

The microphone switching processing unit 51c outputs, to the echo cancellation processing unit 52, an input signal from one of the microphones 12 and 13 that has been determined, by the microphone-to-be-used determination processing unit 51b, to be used, and does not output, to the echo cancellation processing unit 52, an input signal from the other one of the microphones that has not been determined, by the microphone-to-be-used determination processing unit 51b, to be used. In this manner, the processing of switching between the microphones 12 and 13 is performed.

The echo cancellation processing unit 52 performs echo cancellation processing on the input signal, which has been output from the microphone switching processing unit 51c, and outputs the input signal, on which the echo cancellation processing has been performed, as transmission voice. The speaker amplifier 53 amplifies a voice signal (here, a signal of reception voice) and outputs the voice signal to the speaker 11. With this, the onboard device 1 functions as a communication device.

According to the present embodiment, the speaker 11 and the plurality of microphones 12 and 13 are provided inside the casing 10. Thus, by simply installing the casing 10 in the vehicle cabin 100, the speaker 11 and the microphones 12 and 13 can be installed at once. Moreover, according to the present embodiment, with the speaker 11 and the plurality of microphones 12 and 13 being provided on one surface (here, the front surface 10a), it is only required that the casing 10 be simply installed such that the front surface 10a thereof faces the vehicle cabin 100, thus the onboard device 1 can easily be arranged in the vehicle cabin 100.

Moreover, in the present embodiment, when viewed in the +z direction, the angle θ1 formed between the line L1 and the center line 11b and the angle θ1 formed between the line L2 and the center line 11b are substantially from 10 degrees to 20 degrees, whereby, while the distance between the speaker 11 and the microphones 12 and 13 can be widened as much as possible, the size of the casing 10 (in this case, the width of the front surface 10a in the x direction) can be reduced.

Moreover, according to the present embodiment, the casing 10 is provided in a front portion of the vehicle cabin 100 and in the vicinity of the center in the vehicle width direction such that the direction substantially orthogonal to the center line ax1 extends along the vehicle width direction, and the two microphones 12 and 13 are provided at the line-symmetric positions with respect to the center line ax1. This makes it possible to determine the wording that the driver or the passenger uses and the loudness thereof, and based on the determination, the switch-over to the microphone that is to be used can be done.

### Reference embodiment

In the first embodiment of the present invention, the casing 10 is reduced in size by reducing the width of the front surface 10a in the x direction. However, a method of reducing the casing in size is not limited thereto.

In a reference embodiment, the casing is reduced in size by reducing the width of the front surface of the casing in the y direction. Description on an onboard device 2 according to the reference embodiment is provided below. Note that the same components as those of the onboard device 1 according to the first embodiment are denoted with the same reference symbols, and description thereof is omitted.

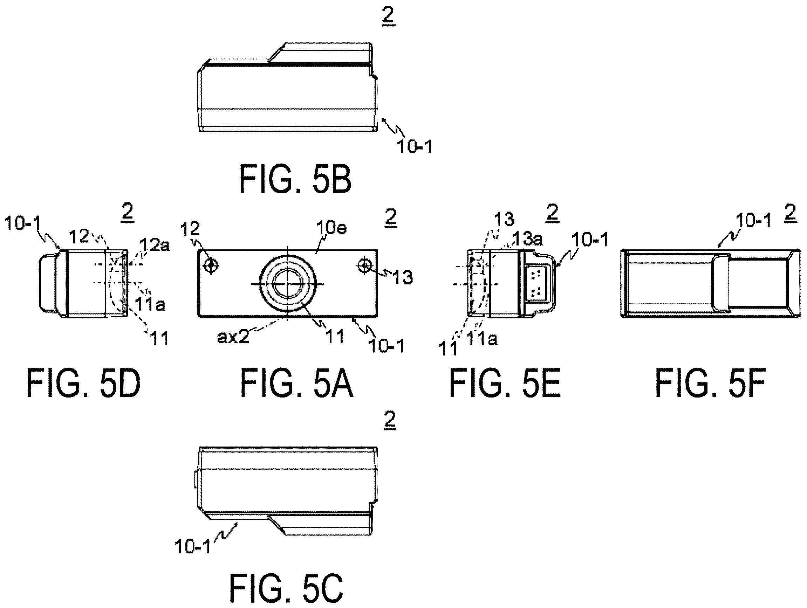

The onboard device 2 is provided in the dashboard 106 (see FIG. 1) in the vicinity of the center in the vehicle width direction. FIGS. 5A, 5B, 5C, 5D, 5E, and 5F are six views illustrating a schematic configuration of the onboard device 2, and are a front view, a top view, a bottom view, a left side view, a right side view, and a back side view, respectively.

The onboard device 2 mainly includes a casing 10-1, the speaker 11, and the microphones 12 and 13. The microphones 12 and 13 have a similar configuration. A center line ax2 of a front surface 10e and the center line 11a extending in the thickness direction of the speaker 11 overlap each other. Moreover, the center line ax2 and the center line 11a are substantially orthogonal to each other.

The casing 10-1 is a box-like member having a substantially rectangular parallelepiped shape and is hollow inside. Inside the casing 10-1, the speaker 11, the microphones 12 and 13, the control unit 50 (not shown), and the like are provided.

The casing 10-1 is provided in the vehicle cabin 100 such that a direction substantially orthogonal to the center line ax2 on the front surface 10e (see FIG. 5A) extends along the vehicle width direction. Moreover, preferably the casing 10-1 is provided such that the center line ax2 is positioned substantially at the center in the vehicle width direction, but it is only required that the casing 10-1 be provided to the vicinity of the center in the vehicle width direction.

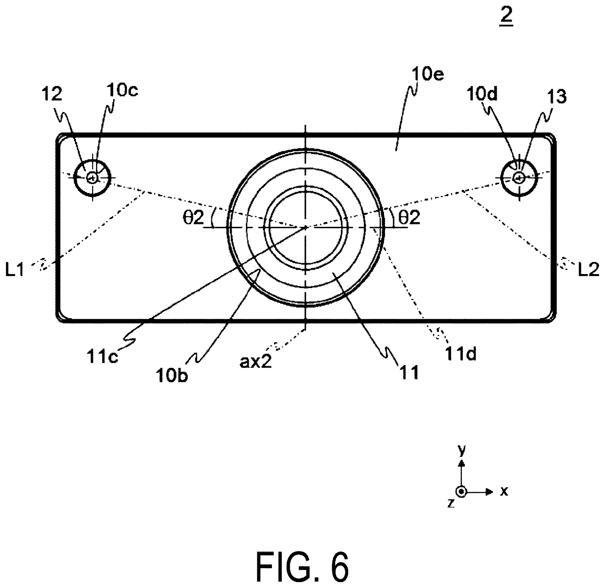

FIG. 6 is a front view illustrating the schematic configuration of the onboard device 2. FIG. 6 is an enlarged view of FIG. 5A. In FIG. 6, the front surface 10e is substantially parallel with a plane xy. A right-and-left direction on the paper surface of the figure is an x direction, an up-and-down direction on the paper surface of the figure is a y direction, and the thickness direction of the casing 10-1 is a z direction.

The speaker 11 and the microphones 12 and 13 are arranged not to overlap each other when viewed in the +z direction. In the present reference embodiment, when viewed in the +z direction, the speaker 11 and the microphones 12 and 13 are arranged such that the position of the speaker 11 in a direction substantially orthogonal to the center line ax2 (the x direction) and the positions of the microphones 12 and 13 in the x direction do not overlap each other.

In order to widen the distance between the speaker 11 and the microphones 12 and 13 as much as possible, the microphones 12 and 13 are respectively arranged in the vicinities of both right and left ends of the front surface 10e (the ends on the +x side and the -x side).

The speaker 11 is provided substantially at the center of the front surface 10e in the x direction. The microphones 12 and 13 are arranged at the line-symmetric positions, with the center line ax2 being the center therebetween. That is, the microphone 13 is arranged near the driver seat 101, and the microphone 12 is arranged near the passenger seat 102. Therefore, the microphone control unit 51 is capable of calculating from which direction sound is coming, based on a difference between a time taken for sound to reach the microphone 12 and a time taken for sound to reach the microphone 13.

When viewed in the +z direction, an angle θ2 formed between the line L1 connecting the center point 11c with the center of the microphone 12 and a center line 11d substantially orthogonal to the center line ax2 of the speaker 11; and an angle θ2 formed between the line L2 connecting the center point 11c with the center of the microphone 13 and the center line 11d are acute angles. The angles θ2 each are substantially from 10 degrees to 20 degrees (in the present reference embodiment, substantially 14 degrees).

With this, the size of the casing 10-1 (here, the width of the front surface 10a in the y direction) can be reduced.

### Second embodiment

In the reference embodiment of the present invention, the speaker 11 is arranged in the longitudinal direction such that the front surface of the speaker 11 is exposed relative to the front surface 10a. However, the arrangement mode of the speaker 11 is not limited thereto.

In a second embodiment, the casing is reduced in size by arranging the speaker 11 in a transverse direction. Description on an onboard device 3 according to the second embodiment is provided below. Note that the same components as those of the onboard device 1 according to the first embodiment and the onboard device 2 according to the reference embodiment are denoted with the same reference symbols, and description thereof is omitted.

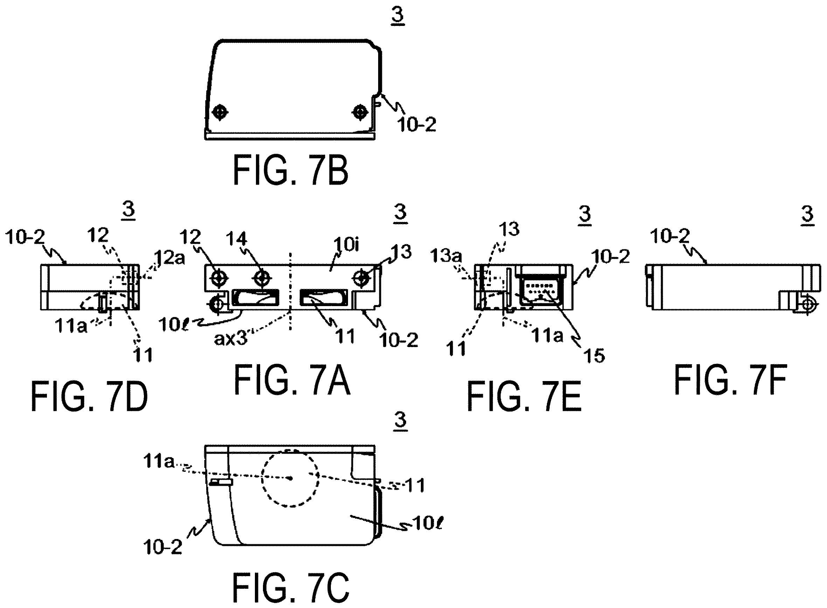

The onboard device 3 is provided to the dashboard 106 (see FIG. 1) in the vicinity of the center in the vehicle width direction. FIGS. 7A, 7B, 7C, 7D, 7E, and 7F are six views illustrating a schematic configuration of the onboard device 3, and are a front view, a top view, a bottom view, a left side view, a right side view, and a back side view, respectively.

The onboard device 3 mainly includes a casing 10-2, the speaker 11, microphones 12, 13, and 14, and the connector 15. A center line ax3 of a front surface 10i, which extends substantially along a front-and-rear direction of the vehicle cabin 100, and the center line 11a extending along the thickness direction of the speaker 11 overlap each other.

The casing 10-2 is a box-like member having a substantially rectangular parallelepiped shape and is hollow inside. Inside the casing 10-2, the speaker 11, the microphones 12, 13, and 14, the control unit 50 (not shown), and the like are provided. The casing 10-2 is provided in the vehicle cabin 100 such that the center line ax3 of the front surface 10i (see FIG. 7A) extends along the front-and-rear direction of the vehicle cabin 100 and the center line ax3 is positioned substantially at the center in the vehicle width direction.

The speaker 11 is provided in a transverse direction such that the front surface of the speaker 11 faces a bottom surface 101 of the casing 10-2. In other words, the front surface 10i and the center line 11a are substantially parallel with each other. Moreover, the center line ax3 and the center line 11a overlap with each other, and these lines are substantially parallel with each other.

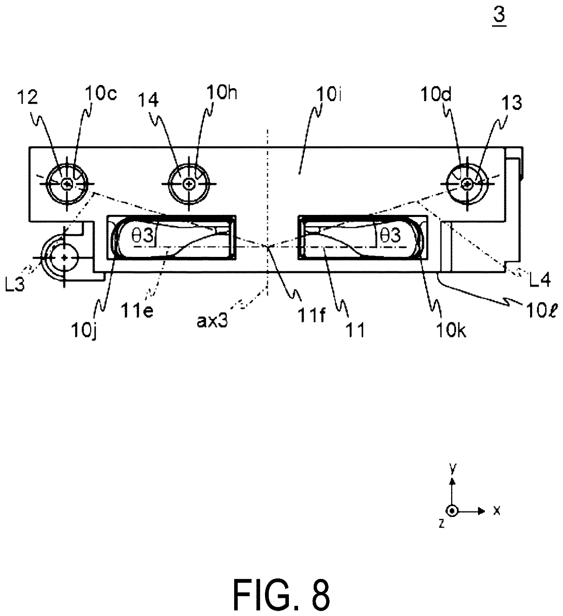

FIG. 8 is a front view illustrating the schematic configuration of the onboard device 3. FIG. 8 is an enlarged view of FIG. 7A. In FIG. 8, the front surface 10i is substantially parallel with a plane xy. A right-and-left direction on the paper surface of the figure is an x direction, an up-and-down direction on the paper surface of the figure is a y direction, and the thickness direction of the casing 10-2 is a z direction.

Holes 10c, 10d, and 10h are formed in the front surface 10i. When viewed in the +z direction, the surface of the microphone 14 is exposed through the hole 10h. Further, holes 10j and 10k are formed in the front surface 10i at positions overlapping the speaker 11 when viewed in the +z direction. The side surface of the speaker 11 is exposed through the holes 10j and 10k. In the onboard device 3, the front surface of the speaker 11 faces the bottom surface 101, hence a diaphragm cannot be exposed relative to the front surface 10i. Thus, the holes 10j and 10k are formed in the front surface 10i to cause sound output from the speaker 11 to be easily audible outside the casing 10-2.

The speaker 11 is provided substantially at the center of the front surface 10i in the x direction. The microphones 12 and 13 are arranged at the line-symmetric positions, with the center line ax3 being the center therebetween. That is, the microphone 13 is arranged near the driver seat 101, and the microphone 12 is arranged near the front passenger seat 102. Therefore, the microphone control unit 51 is capable of calculating from which direction sound is coming, based on a difference between a time taken for sound to reach the microphone 12 and a time taken for sound to reach the microphone 13.

The speaker 11 and the microphones 12 and 13 are arranged not to overlap each other when viewed in the +z direction. In the present embodiment, the speaker 11 and the microphones 12 and 13 are arranged such that the position in a direction substantially orthogonal to the center line ax3 (the x direction) and the positions of the microphones 12 and 13 in the x direction do not overlap each other.

In order to widen the distance between the speaker 11 and the microphones 12 and 13 as much as possible, the microphones 12 and 13 are respectively arranged in the vicinities of both right and left ends (the ends on the +x side and the -x side) of the front surface 10i.

An intersection point between a center line 11e of the thickness of the speaker 11 and the center line ax3 is a center point 11f. When viewed in the +z direction, an angle θ3 formed between a line L3 connecting the center point 11f with the center of the microphone 12 and the center line 11e; and an angle θ3 formed between a line L4 connecting the center point 11f with the center of the microphone 13 and the center line 11e are acute angles. The angles θ3 each are substantially from 10 degrees to 20 degrees (in the present embodiment, substantially 16 degrees). With this, the size of the casing 10-2 (here, the width of the front surface 10i in the y direction) can be reduced.

According to the present embodiment, by arranging the speaker 11 in the transverse direction, the size of the casing 10-2 (here, the width of the front surface 10i in the y direction) can be further reduced. For example, in the onboard device 2, the speaker 11 is arranged in the longitudinal direction such that the front surface of the speaker 11 is exposed relative to the front surface 10e, hence the width of the casing 10-1 in the longitudinal direction (the y direction) is increased. In contrast, in the onboard device 3, the speaker 11 is arranged in the transverse direction, and hence the casing 10-2 can be further reduced in size.

As described above, the embodiments of the invention have been described in detail with reference to the drawings. However, specific configurations thereof are not limited to the embodiments.

Moreover, the wording "substantially" in the present invention is not to be understood as merely being strictly the same and is a concept that includes variations and modifications to an extent that does not result in loss in identity. For example, wordings "substantially parallel" and "substantially orthogonal" are not limited to "strictly parallel" and "strictly orthogonal." In addition, for example, wordings such as "parallel," "orthogonal," and the like include "substantially parallel," "substantially orthogonal," and the like, respectively, without being strictly limited to the parallel state, orthogonal state, and the like, respectively. In addition, the wording "vicinity" is used in the present invention to mean a concept, by which, for example, a place in the vicinity of a certain point A may include the point A or otherwise, as long as the place is near the point A.

### Reference Signs List

1, 2, 3 Onboard device
10, 10-1, 10-2 Casing
10a, 10e, 10i Front surface
10b, 10c, 10d, 10h, 10j, 10k Hole
101 Bottom surface
11 Speaker
11a, 11b, 11d, 11e Center line
11c, 11f Center point
12, 13, 14 Microphone
12a, 13a Center line
15 Connector
51 Control unit
51a Multiple-microphone signal input unit
51b Microphone-to-be-used determination processing unit
51c Microphone switching processing unit
52 Echo cancellation processing unit
53 Speaker amplifier
100 Vehicle cabin
101 Driver seat
102 Front passenger seat
104 Steering wheel
105 Windshield
106 Dashboard
107 Speedometer
108 Tachometer
109 Display unit

## Claims

1. A device (1) for being mounted on board of a vehicle, comprising:
a casing (10) configured to be provided in a front portion of a vehicle cabin (100) and in a vicinity of a center in a vehicle width direction, the casing (10) configured to be provided such that a direction substantially orthogonal to a first center line (ax1), which is a center line of a first surface (10a), extends along the vehicle width direction;
a speaker (11) adjacently provided to the first surface (10a), inside the casing (10); and
a first microphone (12) and a second microphone (13) adjacently provided to the first surface (10a), inside the casing (10),
the speaker (11), the first microphone (12), and the second microphone (13) being arranged not to overlap each other when viewed in a direction facing the first surface (10a),
the speaker (11) being provided such that, when viewed in the direction facing the first surface (10a), the first center line (ax1) and a second center line (11a), which is a center line extending in a thickness direction of the speaker (11), overlap each other, and
the first microphone (12) and the second microphone (13) being arranged at line-symmetric positions, with the first center line (ax1) being a center therebetween,
wherein the second center line (11a) is substantially orthogonal to the first surface (10a), **characterised in that**
a width of the first surface (10a) along the first center line (ax1) is larger than a width of the first surface (10a) in a direction orthogonal to the first center line (ax1),
when viewed in the direction facing the first surface (10a), an angle (θ1) formed between a first line (L1), which connects a point (11c) of intersection of the first center line (ax1) and the second center line (11a) with a center of the first microphone (12), and a second line (11b) of the speaker (11) is substantially from 10 degrees to 20 degrees, the second line (11b) being a center line substantially parallel with the first center line (ax1).

2. A device (3) for being mounted on board of a vehicle (100), comprising:
a casing (10-2) configured to be provided in a front portion of a vehicle cabin (100) and in a vicinity of a center in a vehicle width direction, the casing (10-2) configured to be provided such that a direction substantially orthogonal to a first center line (ax3), which is a center line of a first surface (10i), extends along the vehicle width direction;
a speaker (11) adjacently provided to the first surface (10i), inside the casing (10-2); and
a first microphone (12) and a second microphone (13) adjacently provided to the first surface (10i), inside the casing (10-2),
the speaker (11), the first microphone (12), and the second microphone (13) being arranged not to overlap each other when viewed in a direction facing the first surface (10i),
the speaker (11) being provided such that, when viewed in the direction facing the first surface (10i), the first center line (ax3) and a second center line (11a), which is a center line extending in a thickness direction of the speaker (11), overlap each other, and
the first microphone (12) and the second microphone (13) being arranged at line-symmetric positions, with the first center line (ax3) being a center therebetween,
a hole (10j) is formed in the first surface (10i) at a position of overlapping the speaker (11), **characterised in that**
the second center line (11a) is substantially parallel with the first surface (10i) and the first center line (ax3), and
when viewed in the direction facing the first surface (10i), an angle (θ3) formed between a fifth line (L3) and a fourth line (11e) is substantially from 10 degrees to 20 degrees, the fifth line (L3) connecting a center of the first microphone (12) with a point of intersection of the first center line (ax3) and the fourth line (11e), the fourth line (11e) being a center line of a thickness of the speaker (11).

3. The device (1; 3) according to claims 1 or 2, further comprising:
a signal input unit (51a) configured to acquire an input signal from the first microphone (12) and an input signal from the second microphone (13);
a determination processing unit (51b) configured to determine whether to use the first microphone (12) or the second microphone (13), based on the input signal from the first microphone (12) and the input signal from the second microphone (13); and
a voice processing unit (52) configured to process the input signal from the first microphone (12) or the input signal from the second microphone (13), based on a result of determination made by the determination processing unit (51b).

## Patentansprüche

1. Vorrichtung (1) für die Montage an Bord eines Fahrzeugs, umfassend:
ein Gehäuse (10), dass so konfiguriert ist, um in einem Frontabschnitt einer Fahrzeugkabine (100) und in der Nähe eines Zentrums in einer Fahrzeugbreitenrichtung bereitgestellt zu sein, wobei das Gehäuse (10) dazu konfiguriert ist, um so bereitgestellt zu sein, dass sich eine Richtung im Wesentlichen orthogonal zu einer ersten Zentrumslinie (ax1), die eine Zentrumslinie einer ersten Fläche (10a) ist, entlang der Fahrzeugbreitenrichtung erstreckt,
ein Lautsprecher (11), der benachbart zur ersten Fläche (10a) innerhalb des Gehäuses (10) bereitgestellt ist, und
ein erstes Mikrofon (12) und ein zweites Mikrofon (13), die benachbart zur ersten Fläche (10a) innerhalb des Gehäuses (10) bereitgestellt sind, wobei
der Lautsprecher (11), das erste Mikrofon (12) und das zweite Mikrofon (13), so angeordnet sind, dass sie sich, betrachtet aus einer Richtung, die der ersten Fläche (10a) zugewandt ist, einander nicht überlappen,
der Lautsprecher (11) so bereitgestellt ist, dass, betrachtet aus einer Richtung, die der ersten Fläche (19a) zugewandt ist, die erste Zentrumslinie (ax1) und eine zweite Zentrumslinie (11a), die eine Zentrumslinie ist, die sich in einer Dickenrichtung des Lautsprechers (11) erstreckt, einander überlappen, und
das erste Mikrofon (12) und das zweite Mikrofon (13) auf einer Liniensymmetrischen Position angeordnet sind, wobei die erste Zentrumslinie (ax1) ein Zentrum dazwischen ist, wobei
die zweite Zentrumslinie (11a) im Wesentlichen orthogonal zur ersten Fläche (10a) ist, **gekennzeichnet dadurch, dass**
eine Breite der ersten Fläche (10a) entlang der ersten Zentrumslinie (ax1) größer als eine Breite der ersten Fläche (10a) in einer Richtung orthogonal zur ersten Zentrumslinie (ax1) ist,
ein Winkel (θ1), betrachtet aus der Richtung, die der ersten Fläche zugewandt ist, der zwischen einer Linie (L1), die einen Kreuzungspunkt (11c) der ersten Zentrumslinie (ax1) und der zweiten Zentrumslinie (11a) mit dem Zentrum des ersten Mikrofons (12) verbindet, und einer zweiten Linie (11b) des Lautsprechers (11) gebildet ist, im Wesentlichen 10 Grad bis 20 Grad beträgt, wobei die zweite Linie (11b) eine Zentrumslinie ist, die im Wesentlichen parallel zur ersten Zentrumslinie (ax1) ist.

2. Vorrichtung (3) für die Montage an Bord eines Fahrzeugs (100), umfassend:
ein Gehäuse (10-2), das so konfiguriert ist, um in einem Frontabschnitt einer Fahrzeugkabine (100) und in der Nähe eines Zentrums in einer Fahrzeugbreitenrichtung bereitgestellt zu sein, wobei das Gehäuse (10-2) dazu konfiguriert ist, um so bereitgestellt zu sein, dass sich eine Richtung im Wesentlichen orthogonal zu einer ersten Zentrumslinie (ax3), die eine Zentrumslinie einer ersten Fläche (10i) ist, entlang der Fahrzeugbreitenrichtung erstreckt,
ein Lautsprecher (11), der benachbart zur ersten Fläche (10i) innerhalb des Gehäuses (10-2) bereitgestellt ist, und
ein erstes Mikrofon (12) und ein zweites Mikrofon (13), die benachbart zur ersten Fläche (10i) innerhalb des Gehäuses (10-2) bereitgestellt sind, wobei
der Lautsprecher (11), das erste Mikrofon (12) und das zweite Mikrofon (13), so angeordnet sind, dass sie sich, betrachtet aus einer Richtung, die der ersten Fläche (10i) zugewandt ist, einander nicht überlappen,
der Lautsprecher (11) so bereitgestellt ist, dass, betrachtet aus einer Richtung, die der ersten Fläche (10i) zugewandt ist, die erste Zentrumslinie (ax3) und eine zweite Zentrumslinie (11a), die eine Zentrumslinie ist, die sich in einer Dickenrichtung des Lautsprechers (11) erstreckt, einander überlappen, und
das erste Mikrofon (12) und das zweite Mikrofon (13) auf einer Liniensymmetrischen Position angeordnet sind, wobei die erste Zentrumslinie (ax3) ein Zentrum dazwischen ist, wobei
ein Loch (10j) in der ersten Fläche (10i) an einer den Lautsprecher überlappenden Position gebildet ist, **gekennzeichnet dadurch, dass**
die zweite Zentrumslinie (11a) im Wesentlichen parallel mit der ersten Fläche (10i) und der ersten Zentrumslinie (ax3) ist, und
ein Winkel (θ3), betrachtet aus der Richtung, die der ersten Fläche (10i) zugewandt ist, der zwischen einer fünften Linie (L3) und einer vierten Linie (11e) gebildet ist, im Wesentlichen 10 Grad bis 20 Grad beträgt, wobei die fünfte Linie (L3) ein Zentrum des ersten Mikrofons (12) mit einem Kreuzungspunkt der ersten Zentrumslinie (ax3) und der vierten Linie (11e) verbindet, wobei die vierte Linie (11e) eine Zentrumslinie von einer Dicke des Lautsprechers (11) ist.

3. Vorrichtung (1, 3) gemäß Anspruch 1 oder 2, des Weiteren umfassend:
eine Signaleingabeeinheit (51a), die so konfiguriert ist, ein Eingangssignal des ersten Mikrofons (12) und ein Eingangssignal des zweiten Mikrofons (13) zu erfassen,
eine Bestimmungsverarbeitungseinheit (51b), die so konfiguriert ist, basierend auf dem Eingangssignal des ersten Mikrofons (12) und dem Eingangssignal des zweiten Mikrofons (13) zu bestimmen ob das erste Mikrofon (12) oder das zweite Mikrofon (13) zu verwenden ist, und
eine Stimmenverarbeitungseinheit (52), die so konfiguriert ist, basierend auf dem Bestimmungsergebnis, das von der Bestimmungsverarbeitungseinheit (51b) gemacht wurde, das Eingangssignal des ersten Mikrofons (12) oder das Eingangssignal des zweiten Mikrofons (13) zu verarbeiten.

## Revendications

1. Dispositif (1) destiné à être embarqué à bord d'un véhicule, comprenant :
un boîtier (10) configuré pour être fourni dans une partie avant d'une cabine de véhicule (100) et au voisinage d'un centre dans une direction de largeur de véhicule, le boîtier (10) configuré pour être prévu de telle sorte qu'une direction sensiblement orthogonale à une première ligne centrale (ax1), qui est une ligne centrale d'une première surface (10a), s'étend le long de la direction de largeur de véhicule ;
un haut-parleur (11) prévu de manière adjacente à la première surface (10a), à l'intérieur du boîtier (10) ; et
un premier microphone (12) et un second microphone (13) disposés de manière adjacente à la première surface (10a), à l'intérieur du boîtier (10),
le haut-parleur (11), le premier microphone (12) et le second microphone (13) étant disposés de manière à ne pas se chevaucher l'une l'autre lorsqu'ils sont vus dans une direction faisant face à la première surface (10a),
le haut-parleur (11) étant prévu de telle sorte que, lorsqu'il est vu dans la direction faisant face à la première surface (10a), la première ligne centrale (ax1) et une seconde ligne centrale (11a), qui est une ligne centrale s'étendant dans une direction d'épaisseur du haut-parleur (11), se chevauchent l'un l'autre, et
le premier microphone (12) et le second microphone (13) étant disposés à des positions symétriques en ligne, avec la première ligne centrale (ax1) étant un centre entre eux,
dans lequel la seconde ligne centrale (11a) est sensiblement orthogonale à la première surface (10a), **caractérisé en ce que**
une largeur de la première surface (10a) le long de la première ligne centrale (ax1) est supérieure à une largeur de la première surface (10a) dans une direction orthogonale à la première ligne centrale (ax1),
lorsqu'il est vu dans la direction faisant face à la première surface (10a), un angle (θ1) formé entre une première ligne (L1), qui relie un point (11c) d'intersection de la première ligne centrale (ax1) et de la seconde ligne centrale (11a) avec un centre du premier microphone (12), et une seconde ligne (11b) du haut-parleur (11) est sensiblement de 10 degrés à 20 degrés, la seconde ligne (11b) étant une ligne centrale sensiblement parallèle à la première ligne centrale (ax1).

2. Dispositif (3) destiné à être embarqué à bord d'un véhicule (100), comprenant :
un boîtier (10-2) configuré pour être prévu dans une partie avant d'une cabine de véhicule (100) et à proximité d'un centre dans une direction de largeur de véhicule, le boîtier (10-2) configuré pour être prévu de telle sorte qu'une direction sensiblement orthogonale à une première ligne centrale (ax3), qui est une ligne centrale d'une première surface (10i), s'étend le long de la direction de largeur de véhicule ;
un haut-parleur (11) prévu de manière adjacente à la première surface (10i), à l'intérieur du boîtier (10-2) ; et
un premier microphone (12) et un second microphone (13) disposés de manière adjacente à la première surface (10i), à l'intérieur du boîtier (10-2),
le haut-parleur (11), le premier microphone (12) et le second microphone (13) étant disposés de manière à ne pas se chevaucher l'une l'autre lorsqu'ils sont vus dans une direction faisant face à la première surface (10i),
le haut-parleur (11) étant prévu de telle sorte que, vu dans la direction faisant face à la première surface (10i), la première ligne centrale (ax3) et une seconde ligne centrale (11a), qui est une ligne centrale s'étendant dans une direction d'épaisseur du haut-parleur (11), se chevauchent l'une l'autre, et
le premier microphone (12) et le second microphone (13) étant disposés à des positions symétriques en ligne, la première ligne centrale (ax3) étant un centre entre eux,
un trou (10j) est formé dans la première surface (10i) à une position de chevauchement du haut-parleur (11), **caractérisé en ce que**
la seconde ligne centrale (11a) est sensiblement parallèle à la première surface (10i) et à la première ligne centrale (ax3), et
lorsqu'il est vu dans la direction faisant face à la première surface (10i), un angle (θ3) formé entre une cinquième ligne (L3) et une quatrième ligne (11e) est sensiblement de 10 degrés à 20 degrés, la cinquième ligne (L3) reliant un centre du premier microphone (12) à un point d'intersection de la première ligne centrale (ax3) et de la quatrième ligne (11e), la quatrième ligne (11e) étant une ligne centrale d'une épaisseur du haut-parleur (11).

3. Dispositif (1 ; 3) selon les revendications 1 ou 2, comprenant en outre :
une unité d'entrée de signal (51a) configurée pour acquérir un signal d'entrée provenant du premier microphone (12) et un signal d'entrée provenant du second microphone (13) ;
une unité de traitement de détermination (51b) configurée pour déterminer s'il faut utiliser le premier microphone (12) ou le second microphone (13), sur la base du signal d'entrée provenant du premier microphone (12) et du signal d'entrée provenant du second microphone (13) ; et
une unité de traitement vocal (52) configurée pour traiter le signal d'entrée provenant du premier microphone (12) ou le signal d'entrée provenant du second microphone (13), sur la base d'un résultat de détermination effectué par l'unité de traitement de détermination (51b).
